# EUROPEAN PATENT SPECIFICATION

(11) **EP 3 284 726 B1**
(45) Date of publication and mention of the grant of the patent: **03.05.2023**
(21) Application number: 17153851.5
(22) Date of filing: 30.01.2017
(51) Int. Cl.: C02F 1/44, B01D 61/00, C02F 103/36, C02F 103/06, C02F 103/10, C02F 1/20, C02F 1/52, C02F 101/32

(54) **METHOD FOR TREATING PRODUCED WATER WITH FORWARD OSMOSIS**
VERFAHREN ZUR BEHANDLUNG VON PRODUCED WATER DURCH DIREKTEOSMOSE
PROCÉDÉ DE TRAITEMENT D'EAU DE FABRICATION À L'AIDE D'OSMOSE DIRECTE

(30) Priority: 16.08.2016 US 201615238284
(43) Date of publication of application: 21.02.2018
(73) Proprietor: Linde GmbH, 82049 Pullach (DE)
(72) Inventor: ASLAM, Naveed, Houston, TX 77030 (US)
(74) Representative: Gellner, Bernd

(56) References cited:
- WO-A1-2016/094835
- US-A1- 2015 175 447
- US-A1- 2015 329 398
- US-A1- 2016 046 360
- JAMIL SHAZAD ET AL: "Application of pressure assisted forward osmosis for water purification and reuse of reverse osmosis concentrate from a water reclamation plant", SEPARATION AND PURIFICATION TECHNOLOGY, ELSEVIER SCIENCE, AMSTERDAM, NL, vol. 171, 25 July 2016 (2016-07-25), pages 182-190, XP029707096, ISSN: 1383-5866, DOI: 10.1016/J.SEPPUR.2016.07.036
- MASAFUMI SHIBUYA ET AL: "Effects of operating conditions and membrane structures on the performance of hollow fiber forward osmosis membranes in pressure assisted osmosis", DESALINATION., vol. 365, 1 June 2015 (2015-06-01), pages 381-388, XP055365928, NL ISSN: 0011-9164, DOI: 10.1016/j.desal.2015.03.005

## Description

### Technical field of the present invention

The present invention relates to a method for treating produced water. In this context, reference can be made to WO 2016/094835 A1. Reference US 2015/0175447 A1 discloses a pressurized forward osmosis separation process for wastewater or contaminated water purification.

### Technological background of the present invention

Hydraulic fracturing is becoming a desirable method for extracting hydrocarbons. However, this method is being given scrutiny by public and regulatory agencies due to their extensive requirement for and consumption of water.

This problem is exacerbated, for example in certain regions of the United States, because there is a water shortage to contend with. For example the Permian Basin in Texas is one such area so there is a continuous need for methods that use water more efficiently in the hydraulic fracturing operations.

### Disclosure of the present invention: object, solution, advantages

Starting from the disadvantages and shortcomings as described above as well as taking the prior art as discussed into account, an object of the present invention is to overcome the limitations and problems that earlier methods have experienced.

This object is accomplished by a method comprising the features of claim 1. Advantageous embodiments, expedient improvements and other optional features of the present invention are set forth herein and disclosed in the respective dependent claims.

The present invention basically provides for a method for reclaiming produced water and utilizes a forward osmosis unit to concentrate and produce fresh water from oil and gas produced water using feeds of nitrogen and carbon dioxide to the forward osmosis unit.

More particularly, a method for treating produced water from a fraccing source is disclosed. The method first mixes nitrogen and produced water and feeds the mixture to a forward osmosis unit containing a semi-permeable membrane; carbon dioxide gas is then fed to the forward osmosis unit, therein creating a pressurized nitrogen side and a pressurized carbon dioxide side of the forward osmosis unit; concentrated produced water is recovered from the pressurized nitrogen side of the forward osmosis unit and fresh water is recovered from the pressurized carbon dioxide side of the forward osmosis unit.

In one embodiment of the present invention, there is disclosed a method for treating produced water comprising the steps of:
a) mixing nitrogen and produced water and feed the mixture to a forward osmosis unit containing a semi-permeable membrane;
b) feeding carbon dioxide gas to the forward osmosis unit, therein creating a pressurized nitrogen side and a pressurized carbon dioxide side of the forward osmosis unit;
c) recovering concentrated produced water from the pressurized nitrogen side of the forward osmosis unit, with said concentrated produced water being fed to a concentrator for separating the nitrogen gas dissolved in said concentrated produced water from said concentrated produced water, and with said concentrated produced water from the concentrator then being fed to a crystallizer;
d) recovering fresh water from the pressurized carbon dioxide side of the forward osmosis unit; and
e) feeding the fresh water recovered from the pressurized carbon dioxide side of the forward osmosis unit and carbon dioxide gas recovered from the pressurized carbon dioxide side of the forward osmosis unit to a separation device, in particular comprising a gravity separator, in which separation device the fresh water is further separated from the carbon dioxide gas and recovered, in particular for reuse or as potable water.

According to an advantageous embodiment of the present invention, the nitrogen and the carbon dioxide gases that are fed to the forward osmosis unit in steps a) and b) above may be at high pressure.

In an expedient embodiment of the present invention, this high pressure may be between about 0.5 MPa to about 3 MPa (about five bar to about thirty bar).

According to a favoured embodiment of the present invention, the nitrogen may be replaced by an inert gas selected from the group consisting of helium, argon and mixtures thereof.

In a preferred embodiment of the present invention, the water from the produced water may be driven through the semi-permeable membrane. The semi-permeable membrane may allow for the passage of certain molecules and not others.

According to an advantageous embodiment of the present invention, the semi-permeable membrane may be made
- from polymers, in particular from poly imides, and/or
- from carbonates, in particular from polyvinyl carbonates.

In the present invention, the concentrated produced water that is recovered from the pressurized nitrogen side of the forward osmosis unit is fed to a concentrator which separates the nitrogen gas dissolved in the concentrated produced water from the concentrated produced water.

According to the present invention, the fresh water recovered from the pressurized carbon dioxide side of the forward osmosis unit is fed to a separation device.

In the present invention, the carbon dioxide gas recovered from the pressurized carbon dioxide side of the forward osmosis unit is also fed to the separation device.

In the forward osmosis unit, the osmotic pressure in the produced water may be lower due to the presence of salts therein. Conversely, the osmotic pressure in the gas driven draw solution may be higher. This may create a driving force within the forward osmosis unit. This driving force may make the water from the produced water move into the draw solution in its attempt to lower its osmotic pressure. In this manner, the water may be separated through the natural driving force unlike reverse osmosis for example where hydraulic pressure may be increased through the use of the pump.

According to the present invention, the fresh water is further separated as such from the carbon dioxide gas in the separation device and recovered, in particular for reuse or as potable water.

In an expedient embodiment of the present invention, the carbon dioxide gas separated out may be fed to a concentrator unit where this recovered carbon dioxide gas may combine with a feed of pressurized carbon dioxide gas for feed into the pressurized carbon dioxide side of the forward osmosis unit.

According to a favoured embodiment of the present invention, Phase II liquid may also be recovered from the separation device and fed to a concentrator unit.

In a preferred embodiment of the present invention, the Phase II liquid may provide enhanced solubility of carbon dioxide.

According to an advantageous embodiment of the present invention, the Phase II liquid when fed to a concentrator, may form a two phase draw solution which under pressure from a carbon dioxide fresh feed may be fed to the forward osmosis unit for separation of water from the produced water.

In the present invention, the concentrated produced water from the concentrator is fed to a crystallizer.

According to a favoured embodiment of the present invention, the concentrator unit may adjust the concentrations of solutes in a draw solution.

In a preferred embodiment of the present invention, a gravity separator may be present in the separation unit.

The methods of the present invention are applicable to any produced water with produced waters having lower concentrations of contaminants preferred.

The average produced water composition is described as follows: i.e., minimum, maximum and average:

| constituent: | average: | maximum: | minimum |
|---|---|---|---|
| COD (mg/l) | 3,000 | 7,900 | 300 |
| pH | 7 | 8 | 6 |
| TDS (mg/l) | 150,000 | 400,000 | 1,000 |
| TSS (mg/l) | 1,200 | 13,800 | 10 |
| O&G (mg/l) | 800 | 1,000 | 600 |
| iron (mg/l) | 100 | 300 | 3 |
| barium (mg/l) | 1,600 | 9,000 | 1 |
| strontium (mg/l) | 2,000 | 6,300 | 40 |
| sulfate (mg/l) | 1,200 | 15,000 | 10 |
| sodium (mg/l) | 36,000 | 150,000 | 3,300 |
| chlorine (mg/l) | 88,000 | 250,000 | 5,000 |
| bicarbonate (mg/l) | 1,800 | 15,000 | 80 |
| calcium (mg/l) | 10,200 | 74,000 | 300 |
| total organic carbon (mg/I) | 800 | 7,200 | 60 |

According to an advantageous embodiment of the present invention, the produced water may be characterized by very high dissolved salts and/or dissolved solids. On average, these amounts of dissolved salts and/or of dissolved solids may be around 150,000 p[arts]p[er]million]. With this amount of dissolved salts and/or of dissolved solids, produced water is typically beyond the capabilities of a traditional reverse osmosis (RO) unit.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1; further improvements, features and advantages of the present invention are explained below in more detail with reference to particular and preferred embodiments by way of non-limiting example and to the appended drawing figure taken in conjunction with the following description of exemplary embodiments, of which:

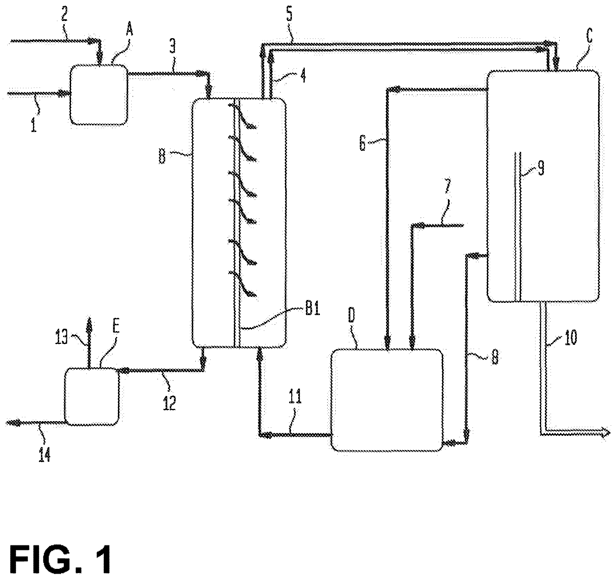

FIG. 1 is a schematic of a method for producing and concentrating fresh water from oil and gas produced water according to the present invention.

### Detailed description of the drawings;

### best way of embodying the present invention

Before explaining the inventive embodiments in detail, it is to be understood that the present invention is not limited in its application to the details of construction and arrangement of parts illustrated in the accompanying drawings, since the present invention is capable of other embodiments and being practiced or carried out in various ways, as defined in the appended claims. Also, it is to be understood that the phraseology or terminology employed herein is for the purpose of description and not of limitation.

In the description above and below, terms such as horizontal, upright, vertical, above, below, beneath and the like, are used solely for the purpose of clarity illustrating the present invention and should not be taken as words of limitation. The drawings are for the purpose of illustrating the present invention and are not intended to be to scale.

Turning to FIG. 1, a method for treating produced water from an oil and gas source is shown. Produced water is fed through line 1 to a mixing chamber A where it will be mixed with high pressure nitrogen fed through line 2. The produced water will contain a number of impurities including particulate materials and hydrocarbons from the well and any fraccing treatments.

The mixture of produced water and high pressure nitrogen is fed from mixing chamber A to a forward osmosis unit B which contains a semi-permeable membrane B1. The effects of this forward osmosis unit B is to drive by way of osmotic pressure to separate the feed of produced water from the solutes present therein.

As such, a concentrated solution of produced water will be fed through line 12 to a concentrator E. This concentrated solution of produced water also contains some nitrogen which will be vented from the concentrator E through line 13. The concentrated produced water from concentrator E is fed to a crystallizer.

The concentrator E will produce concentrated produced water which will be fed through line 14 for further treatment, namely to the crystallizer. The concentrator units in general will adjust the concentrations of solutes in the draw solution for reliable operation of the forward osmosis unit B.

Pressurized carbon dioxide gas is fed through line 7 to a concentrator D which will also receive through line 8 Phase II liquid a separation device C. The pressurized carbon dioxide will dissolve in the Phase II liquid and be fed through line 11 to the forward osmosis unit B.

Because the carbon dioxide will provide higher osmotic pressure on the carbon dioxide side of the semi-permeable membrane, the fresh water from the produced water will diffuse into the carbon dioxide side of the forward osmosis unit B. This fresh water is recovered and fed through line 4 to the separation device C.

The separation unit C will separate phases. For example, fresh water being relatively heavier will settle at the bottom while the organic draw solution, being relatively lighter floats on the water layer. This organic draw solution can be mixed with fresh carbon dioxide to be recycled for further drawing of the water from the produced water.

Carbon dioxide gas will also be recovered from the carbon dioxide side of the semi-permeable membrane and be fed through line 5 to the separation device C. A gravity separator 9 is present in the separation unit C.

The separation device C will separate the fresh water from the Phase II liquid and be recovered through line 10 for reuse in the fraccing operation or as potable water. Carbon dioxide gas which has been separated will be fed through line 6 to the concentrator D where it can join with the pressurized carbon dioxide gas fed through line 7 into the concentrator D thereby supplementing the amount of fresh pressurized carbon dioxide gas needed.

It will be understood that the embodiments described herein are merely exemplary, and that one skilled in the art may make variations and modifications without departing from the scope of the present invention as defined in the appended claims. All such variations and modifications are intended to be included within the scope of the present invention as described and claimed herein. Further, all embodiments disclosed are not necessarily in the alternative, as various embodiments of the present invention may be combined to provide the desired result, as defined in the appended claims.

### List of reference signs

- 1: line or pipe or tube for feeding or introducing produced water to mixing chamber A
- 2: line or pipe or tube for feeding or introducing nitrogen, in particular high pressure nitrogen, to mixing chamber A
- 3: line or pipe or tube from mixing chamber A to forward osmosis unit B
- 4: line or pipe or tube from forward osmosis unit B to separation device or separation unit C for feeding fresh water
- 5: line or pipe or tube from forward osmosis unit B to separation device or separation unit C for feeding carbon dioxide gas
- 6: line or pipe or tube from separation device or separation unit C to concentrator D for feeding carbon dioxide gas
- 7: line or pipe or tube from separation device or separation unit C to concentrator D for feeding pressurized carbon dioxide gas
- 8: line or pipe or tube from separation device or separation unit C to concentrator D for feeding Phase II liquid
- 9: gravity separator
- 10: line or pipe or tube from separation device or separation unit C
- 11: line or pipe or tube from concentrator D to forward osmosis unit B
- 12: line or pipe or tube from forward osmosis unit B to concentrator E
- 13: line or pipe or tube from concentrator E for venting nitrogen
- 14: line or pipe or tube from concentrator E for concentrated produced water
- A: mixing chamber
- B: forward osmosis unit
- B1: semi-permeable membrane of forward osmosis unit B
- C: separation device or separation unit
- D: concentrator unit
- E: concentrator

## Claims

1. A method for treating produced water, comprising the steps of:
a) mixing (A) nitrogen and produced water and feeding the mixture to a forward osmosis unit (B) containing a semi-permeable membrane (B1);
b) feeding carbon dioxide gas to the forward osmosis unit (B), therein creating a pressurized nitrogen side and a pressurized carbon dioxide side of the forward osmosis unit (B);
c) recovering concentrated produced water from the pressurized nitrogen side of the forward osmosis unit (B), with said concentrated produced water being fed to a concentrator (E) for separating the nitrogen gas dissolved in said concentrated produced water from said concentrated produced water, and with said concentrated produced water from the concentrator (E) then being fed to a crystallizer;
d) recovering fresh water from the pressurized carbon dioxide side of the forward osmosis unit (B); and
e) feeding the fresh water recovered from the pressurized carbon dioxide side of the forward osmosis unit (B) and carbon dioxide gas recovered from the pressurized carbon dioxide side of the forward osmosis unit (B) to a separation device (C), in particular comprising a gravity separator (9), in which separation device (C) the fresh water is further separated from the carbon dioxide gas and recovered, in particular for reuse or as potable water.

2. The method according to claim 1 wherein the nitrogen and the carbon dioxide that are fed to the forward osmosis unit (B) in steps a) and b) are at high pressure, in particular between about 0.5 MPa to about 3 MPa (about five bar to about thirty bar).

3. The method according to claim 1 or 2 wherein the nitrogen is replaced with an inert gas selected from the group consisting of helium, argon and mixtures thereof.

4. The method according to at least one of claims 1 to 3 wherein the water from the produced water is driven through the semi-permeable membrane (B1).

5. The method according to at least one of claims 1 to 4 wherein the semi-permeable membrane (B1) is made from polymers with special coatings, in particular from poly imides.

6. The method according to at least one of claims 1 to 4 wherein the semi-permeable membrane (B1) is made from carbonates, in particular from polyvinyl carbonates.

7. The method according to at least one of claims 1 to 6 wherein Phase II liquid is recovered from the separation device (C) and fed to a concentrator unit (D).

8. The method according to claim 7 wherein the concentrator unit (D) adjusts the concentrations of solutes in a draw solution.

9. The method according to claim 7 or 8 wherein the Phase II liquid provides enhanced solubility of carbon dioxide.

10. The method according to at least one of claims 7 to 9 wherein the Phase II liquid forms a two phase draw solution which under pressure from a carbon dioxide feed is fed to the forward osmosis unit (B).

11. The method according to at least one of claims 1 to 10 wherein the recovered carbon dioxide gas is combined with pressurized carbon dioxide gas before being fed to the pressurized carbon dioxide side of the forward osmosis unit (B).

12. The method according to at least one of claims 1 to 11 wherein the produced water contains about 150,000 parts per million dissolved salts and/or dissolved solids.

## Patentansprüche

1. Verfahren zum Aufbereiten von erzeugtem Wasser, umfassend die Schritte:
a) Mischen (A) von Stickstoff und erzeugtem Wasser und Zuführen der Mischung zu einer Vorwärtsosmoseeinheit (B), die eine semipermeable Membran (B1) enthält;
b) Zuführen von Kohlendioxidgas zu der Vorwärtsosmoseeinheit (B), wobei darin eine unter Druck stehende Stickstoffseite und eine unter Druck stehende Kohlendioxidseite der Vorwärtsosmoseeinheit (B) geschaffen werden;
c) Rückgewinnen von konzentriertem erzeugtem Wasser aus der unter Druck stehenden Stickstoffseite der Vorwärtsosmoseeinheit (B), wobei das konzentrierte erzeugte Wasser zu einem Konzentrator (E) zum Trennen des Stickstoffgases, das in dem konzentrierten erzeugten Wasser gelöst ist, aus dem konzentrierten erzeugten Wasser, zugeführt wird und wobei das konzentrierte erzeugte Wasser aus dem Konzentrator (E) dann zu einem Kristallisator zugeführt wird;
d) Rückgewinnen von Frischwasser aus der unter Druck stehenden Kohlendioxidseite der Vorwärtsosmoseeinheit (B); und
e) Zuführen des Frischwassers, das aus der unter Druck stehenden Kohlendioxidseite der Vorwärtsosmoseeinheit (B) rückgewonnen wird, und des Kohlendioxidgases, das aus der unter Druck stehenden Kohlendioxidseite der Vorwärtsosmoseeinheit (B) rückgewonnen wird, zu einer Trennvorrichtung (C), insbesondere umfassend einen Schwerkraftabscheider (9), wobei in der Trennvorrichtung (C) das Frischwasser von dem Kohlendioxidgas weiter getrennt und rückgewonnen wird, insbesondere für eine Wiederverwendung oder als Trinkwasser.

2. Verfahren nach Anspruch 1, wobei sich der Stickstoff und das Kohlendioxid, die zu der Vorwärtsosmoseeinheit (B) in den Schritten a) und b) zugeführt werden, auf hohem Druck befinden, insbesondere zwischen etwa 0,5 MPa bis etwa 3 MPa (etwa fünf Bar bis etwa dreißig Bar).

3. Verfahren nach Anspruch 1 oder 2, wobei der Stickstoff mit einem Inertgas, das aus der Gruppe ausgewählt ist, bestehend aus Helium, Argon und Mischungen davon, ersetzt wird.

4. Verfahren nach mindestens einem der Ansprüche 1 bis 3, wobei das Wasser aus dem erzeugten Wasser durch die semipermeable Membran (B1) getrieben wird.

5. Verfahren nach mindestens einem der Ansprüche 1 bis 4, wobei die semipermeable Membran (B1) aus Polymeren mit speziellen Beschichtungen, insbesondere aus Polyimiden, hergestellt ist.

6. Verfahren nach mindestens einem der Ansprüche 1 bis 4, wobei die semipermeable Membran (B1) aus Carbonaten, insbesondere aus Polyvinylcarbonaten, hergestellt ist.

7. Verfahren nach mindestens einem der Ansprüche 1 bis 6, wobei eine Phase-II-Flüssigkeit aus der Trennvorrichtung (C) rückgewonnen und zu einer Konzentratoreinheit (D) zugeführt wird.

8. Verfahren nach Anspruch 7, wobei die Konzentratoreinheit (D) die Konzentrationen von gelösten Stoffen in einer Zuglösung einstellt.

9. Verfahren nach Anspruch 7 oder 8, wobei die Phase-II-Flüssigkeit eine verbesserte Löslichkeit von Kohlendioxid bereitstellt.

10. Verfahren nach mindestens einem der Ansprüche 7 bis 9, wobei die Phase-II-Flüssigkeit eine Zweiphasen-Zuglösung, die unter Druck aus einer Kohlendioxidzufuhr zu der Vorwärtsosmoseeinheit (B) zugeführt wird, ausbildet.

11. Verfahren nach mindestens einem der Ansprüche 1 bis 10, wobei das rückgewonnene Kohlendioxidgas mit unter Druck stehendem Kohlendioxid kombiniert wird, bevor es zu der unter Druck stehenden Kohlendioxidseite der Vorwärtsosmoseeinheit (B) zugeführt wird.

12. Verfahren nach mindestens einem der Ansprüche 1 bis 11, wobei das erzeugte Wasser etwa 150.000 Teile pro Million gelöste Salze und/oder gelöste Feststoffe enthält.

## Revendications

1. Procédé de traitement d'eau produite, comprenant les étapes consistant à :
a) mélanger (A) de l'azote et de l'eau produite et alimenter le mélange à une unité d'osmose directe (B) contenant une membrane semi-perméable (B1) ;
b) alimenter du dioxyde de carbone gazeux à l'unité d'osmose directe (B), en créant en son sein un côté azote sous pression et un côté dioxyde de carbone sous pression de l'unité d'osmose directe (B) ;
c) récupérer de l'eau produite concentrée à partir du côté azote sous pression de l'unité d'osmose directe (B), ladite eau produite concentrée étant alimentée à un concentrateur (E) pour séparer l'azote gazeux dissous dans ladite eau produite concentrée par rapport à ladite eau produite concentrée, et ladite eau produite concentrée provenant du concentrateur (E) étant ensuite alimentée à un cristallisoir ;
d) récupérer de l'eau douce provenant du côté dioxyde de carbone sous pression de l'unité d'osmose directe (B) ; et
e) alimenter l'eau douce récupérée provenant du côté dioxyde de carbone sous pression de l'unité d'osmose directe (B) et le dioxyde de carbone gazeux récupéré provenant du côté dioxyde de carbone sous pression de l'unité d'osmose directe (B) à un dispositif de séparation (C), en particulier comprenant un séparateur à gravité (9), dispositif de séparation (C) dans lequel l'eau douce est davantage séparée du dioxyde de carbone gazeux et récupérée, en particulier pour réutilisation ou en tant qu'eau potable.

2. Procédé selon la revendication 1, dans lequel l'azote et le dioxyde de carbone qui sont alimentés à l'unité d'osmose directe (B) aux étapes a) et b) sont à pression élevée, en particulier entre environ 0,5 MPa et environ 3 MPa (environ cinq bar à environ trente bar).

3. Procédé selon la revendication 1 ou 2 dans lequel l'azote est remplacé par un gaz inerte choisi dans le groupe constitué d'hélium, argon et mélanges de ceux-ci.

4. Procédé selon au moins l'une des revendications 1 à 3 dans lequel l'eau provenant de l'eau produite est entraînée à travers la membrane semi-perméable (B1).

5. Procédé selon au moins l'une des revendications 1 à 4 dans lequel la membrane semi-perméable (B1) est fabriquée à partir de polymères avec des revêtements spéciaux, en particulier en polyimides.

6. Procédé selon au moins l'une des revendications 1 à 4 dans lequel la membrane semi-perméable (B1) est fabriquée à partir de carbonates, en particulier à partir de carbonates de polyvinyle.

7. Procédé selon au moins l'une des revendications 1 à 6 dans lequel un liquide de Phase II est récupéré du dispositif de séparation (C) et alimenté à une unité de concentrateur (D).

8. Procédé selon la revendication 7 dans lequel l'unité de concentrateur (D) ajuste les concentrations de solutés dans une solution d'extraction.

9. Procédé selon la revendication 7 ou 8 dans lequel le liquide de Phase II fournit une solubilité améliorée de dioxyde de carbone.

10. Procédé selon au moins l'une des revendications 7 à 9 dans lequel le liquide de Phase II forme une solution d'extraction à deux phases qui sous pression à partir d'une alimentation de dioxyde de carbone est alimentée à l'unité d'osmose directe (B).

11. Procédé selon au moins l'une des revendications 1 à 10 dans lequel le dioxyde de carbone gazeux récupéré est combiné avec du dioxyde de carbone gazeux sous pression avant d'être alimenté au côté dioxyde de carbone sous pression de l'unité d'osmose directe (B).

12. Procédé selon au moins l'une des revendications 1 à 11 dans lequel l'eau produite contient environ 150 000 parties par million de sels dissous et/ou de solides dissous.
